# EUROPEAN PATENT APPLICATION

(11) **EP 1 618 781 A1**
(43) Date of publication of application: **25.01.2006**
(21) Application number: 04017175.3
(22) Date of filing: 21.07.2004
(51) Int. Cl.: A01G 3/00, A01G 7/00, A01G 9/10

(54) **Propagation based on small phyllocactus cuttings**

(71) Applicant: GARTNERIET PKM ApS, 5270 Odense N (DK)
(72) Inventor: Madsen, Kristian, 5270 Odense N. (DK)
(74) Representative: Tonnesen, Bo

(57) **Abstract**

The present invention relates to the use of very small, unripe phylloclades from Phyllocactus mother plants as cuttings for the production of new plants. Traditionally, at least substantially ripe phyllocaldes typically of a total length of 4 to 5 cm separated from mother plants have been used for such purposes, but according to the invention very small, unripe phylloclades of a total length often well below 2,5 cm can be used. In the past, the use of such phylloclades has been problematic due to these phylloclades being extremely fragile and easily damaged during manual separation from the mother plants. The invention describes the use of a specific, purely chemical separation method in order to provide the small cuttings, but other separation methods might be used provided they do not cause damage to the cuttings.

(It is suggested that figure 1 be shown with the Abstract).

## Description

### TECHNICAL FIELD

The present invention relates generally to the propagation of Phyllocactus plants based on cuttings and more specifically propagation based on cuttings consisting of a single phylloclade separated from a Phyllocactus branch at an early developmental stage of said phylloclade.

In the present context and specifically in the appended claims, the term "Phyllocactus" is used for any cactus plant comprising one or more branches consisting of a number of separate segments or "phylloclades", where such segments or phylloclades can be used for cuttings for the propagation of new plants. Specifically plants known as Schlumbergera, Rhipsalidopsis and Rhipsalis are regarded as examples of plants which can be used according to the present invention but other plants from which single segments or phylloclades can be removed and used as cuttings could also potentially be used in the present invention. Phyllocactus belongs to the family "cactaceae".

### BACKGROUND OF THE INVENTION

Traditionally, cuttings for the propagation of Phyllocactus plants have been obtained by purely manual or at any rate mechanical removal of individual segments (so-called phylloclades) from mother plants. It has been observed that such manual/mechanical separation of phylloclades is liable to cause damages to the phylloclades in the region at the fracture between these.

In resent years it has become known to replace mechanical separation of phylloclades by chemical means. Thus, the Applicant's co-pending application WO 2004/006500 ("A method for removing phylloclades from phyllocacti") describes the controlled application of ethylene (C₂H₄) for removal of phylloclades. By this method it has become possible in a well-controlled manner for instance to remove one or more phylloclades from the branches of Phyllocactus plants. According to the above document the method is for instance used for removal of the outermost, unripe phylloclades in order to facilitate the development of the immediately adjacent phylloclades into a mature state, and hence to obtain a more satisfactory sales-ready plant. Actual use of these unripe phylloclades is however not mentioned in the above document and such phylloclades, which are small and fragile, have traditionally been regarded as waste.

During traditional manual/mechanical production of Phyllocactus plants by cuttings, small phylloclades are thus normally discarded, the vast majority of these small cuttings being damaged by the mechanical removal from the mother plant. Normally, only cuttings of a length of 2.5 to 5 cm are being used. Thus, a considerable waste of plant material must be accepted in traditional production of Phyllocactus plants based on cuttings.

### DISCLOSURE OF THE INVENTION

On the above background it is an object of the present invention to use small cuttings, which have traditionally been regarded as waste for the propagation of Phyllocactus plants.

Specifically it is an object of the present invention to use the above mentioned chemical method of removing phylloclades to provide a production method with reduced costs both during collection (harvesting) of cuttings and during the subsequent production of small Phyllocactus plants.

The Phyllocactus plants comprised by the invention are specifically, although not necessarily exclusively, Schlumbergera, Rhipsalidopsis and Rhipsalis.

It is a further object of the present invention to significantly reduce freight charges for rooted cuttings.

These and other objects are attained according to a specific aspect of the present invention by a method according to which phylloclades are removed from mother plants at a very early stage by purely chemical means, preferably by exposing the mother plants to an appropriately chosen dose of ethylene (C₂H₄) or an ethylene-releasing agent and subsequently use of the cuttings for the production of new plants, where the phyllocaldes are of considerably smaller dimensions than traditionally, more specific in the range from 1 or 1.5 cm to 2 or 2.5 cm length. Phylloclades of this size removed from mother plants has hitherto only been regarded as waste and had to be removed from the production facilities, which in itself led to increased production costs.

There are a number of advantages associated with the use of these small phylloclades for cuttings, among which the following should specifically be mentioned:

The outermost phylloclades of the mother plant are generally the healthiest phylloclades of the plant, being the less likely to suffer from bacterial or fungal diseases. The overall quality of plants grown from these cuttings is therefore generally improved.

It can furthermore be expected to harvest at least twice as many cuttings from mother plants during one season with the method according to the invention as traditionally, because it is possible to harvest more often than traditionally due to the period of growth of the small phyllociades being substantially shorter than for traditionally applied larger phylloclades. Thus compared with the traditional 30 to 40 cuttings per mother plant, at least 75 to 100 cuttings and more likely even 100 to 150 cuttings per mother plant can be harvested from each mother plant during one season.

The area actually used for mother plants in the production facility can furthermore be reduced, whereby more area can be provided for plant production.

Traditionally 3 to 4 cuttings are set in a single pot of approximately 4 x 4 cm filled with a suitable cultivation medium, for instance sphagnum. The cuttings must be set in the pot at a time sufficiently prior to the removal of the plant to a larger sales pot for sufficiently rooting to have taken place in order for the roots to be able to keep the body of sphagnum together during removal from the small pot and subsequent placement in the larger sales pot. The re-potting in sales pots usually takes place after development of four phylloclades including the cutting itself.

According to an embodiment of the invention, the very small cuttings are set in very small pots (dimensions approximately 0.5 to 1 cm) with only a single phylloclade in each pot.

It is desirable to remove the plants from the small pots at an early stage, where consequently the roots of the plant have not yet developed sufficiently to fill substantially the whole body of cultivation medium. In case of sphagnum as cultivation medium it is difficult, if not impossible, to remove the small plants from the original pots at this stage and to carry out the re-potting into larger pots, because the body of sphagnum will tend to disintegrate when the whole body of sphagnum is not filled with roots. In order to solve this problem, a body of sphagnum mixed with an adhesive can be used, a solution known from the cultivation of other ornamental plants. By the application of the above means it becomes possible not only to carry out re-potting (and possibly also sorting of cuttings into different categories) manually, but the process can actually be carried out automatically for instance by means of suitable robots.

Furthermore, due to the substantially cheaper cuttings resulting from the method according to the invention, it can be beneficial to use 4 to 6 cuttings in a given pot instead of traditionally 3 to 4 cuttings as mentioned above and to let the cuttings develop to a plant with only three phylloclades. This means that cultivation time can be reduced substantially which also leads to reduced production costs.

Furthermore, production based on small pots with small cuttings reduces freight charges and hence provides increased flexibility regarding the site of production. Thus, it becomes more interesting to carry out initial production of Phyllocactus plants in areas with cheap labour force and/or cheap energy resources and subsequent transport to other parts of the world closer to the markets of the finished products.

It should be emphasised that although the above-mentioned separation method based on the application of ethylene has been proven to be an advantageous method of obtaining small cuttings of Phyllocactus plants without causing damages to these extremely fragile cuttings, other methods of separating such cuttings may also be envisaged and the present invention covers the application of small cuttings for the subsequent propagation of sales-ready plants regardless of the actual means of providing these cuttings.

Finally it is understood that numerous embodiments of the method and use of the small cuttings can be envisaged for instance relating to the number of cuttings set in a given pot, the subsequent growth of these cuttings necessary to reach a finished, sales-ready product as well as the specific concentration or dosage of ethylene required for a reliable separation of the unripe phylloclades from mother plants. All such embodiments should be regarded as being comprised by the claimed invention as defined by the appended claims.

### BRIEF DESCRIPTION OF THE DRAWINGS

A specific example of cuttings traditionally used for propagating Phyllocactus plants and the small cuttings used according to the present invention is shown by means of the following figures:
Figure 1. A comparison between cuttings normally used for propagation of Phyllocactus plants and cuttings used according to the invention;
Figure 2. Cuttings set in compartments of a tray.

### DETAILED DESCRIPTION OF THE INVENTION

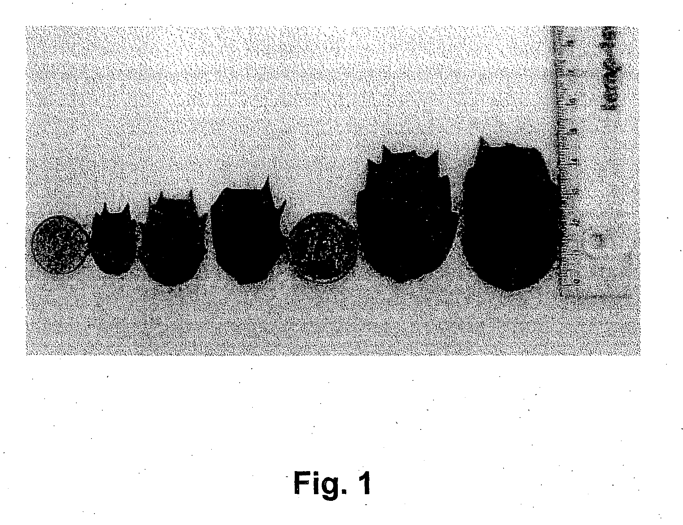

With reference to figure 1 there is shown a comparison between cuttings from Phyllocactus mother plants of the size traditionally used for propagation and the small cuttings used according to the invention. Thus, the traditionally used cuttings shown to the right in figure 1 are of a total length of between 4 and 5 cm, whereas the small cuttings, three of which are shown to the left in figure 1, are of total lengths between 2 and 3 cm. As mentioned before it is according to the invention, however, possible to use even smaller cuttings, for instance down to a total length of approximately 1 cm.

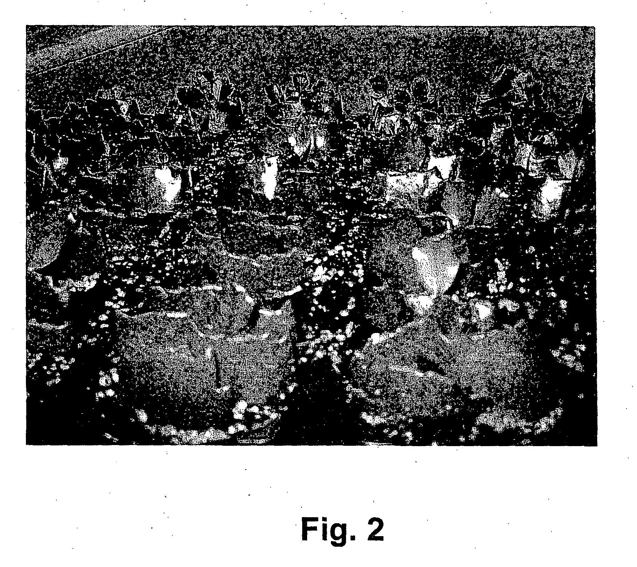

Referring to figure 2 there is shown an example of small cuttings set in compartments in a production tray, in the example shown with 5 cuttings in each tray although also more cuttings could be set in each tray as mentioned above. Pots or compartments of very small dimensions each containing only a single cutting may also be used as mentioned above.

An increased number of cuttings can be obtained from mother plants by increasing the light intensity at the mother plants and/or by increasing the concentration of carbon dioxide at the mother plants. Thus, traditionally a light intensity corresponding to 30 to 40 W/m² and no extra supply of CO₂ to the production environment of the mother plants (i.e. only the normal atmospheric concentration of CO₂ ) have been used, but increasing the amount of light to an intensity corresponding to 60 to 100 W/m² and a supply of carbon dioxide yielding a concentration of 600 to 1000 ppm CO₂ can lead to an increased number of cuttings from the mother plants.

Furthermore, more robust cuttings can be attained by an increased light intensity and providing extra carbon dioxide to the atmosphere surrounding the cuttings once they have been separated from the mother plants and set in the propagation medium. Light intensities and concentration of carbon dioxide in the same order of magnitude as mentioned above for mother plants could also be used for cuttings sat in their propagation medium, although other light intensities and concentrations of carbon dioxide could also be used.

## Claims

1. Method for production of Phyllocactus plants comprising treatment of mother plants of Phyllocactus with ethylene or an ethylene-releasing agent in such a manner that the outermost unripe phylloclades become separated from the remainder of the mother plant, where the method furthermore comprises the setting of said cuttings in an appropriate cultivation medium in a container for subsequent development into a mature plant.

2. Method according to claim 1, **characterised in that** said Phyllocactus specifically belongs to the group consisting of Schlumbergera, Rhipsalidopsis and Rhipsalis.

3. Method according to claim 1 or 2, **characterised in that** said unripe phylloclades are of a length of less than 2.5 cm.

4. Method according to claim 1 or 2, **characterised in that** more than three cuttings are set in each container.

5. Method according to claim 1 or 2, **characterised in that** only one cutting is set in each container.

6. Method according to claim 4 or 5, **characterised in that** said cultivation medium is sphagnum.

7. Method according to claim 6, **characterised in that** said sphagnum is mixed with an adhesive for keeping the body of sphagnum together during re-potting of the cutting.

8. Use of unripe phylloclades from Phyllocactus plants as cuttings for the propagation of Phyllocactus plants.

9. Use according to claim 8, **characterised in that** said Phyllocactus specifically belongs to the group consisting of Schlumbergera, Rhipsalidopsis and Rhipsalis.

10. Use according to claim 9, **characterised in that** said unripe phylloclades are of a length of less than 2.5 cm.

11. Use according to claim 8, **characterised in that** more than three cuttings are set in each container.

12. Use according to claim 8, **characterised in that** only one cutting is set in each container.

13. Use according to any of the preceding claims 8 to 12, **characterised in that** said cultivation medium is sphagnum.
